# EUROPEAN PATENT APPLICATION

(11) **EP 4 637 080 A1**
(43) Date of publication of application: **22.10.2025**
(21) Application number: 24170988.0
(22) Date of filing: 18.04.2024
(51) Int. Cl.: H04L 9/40, H04L 9/08, H04L 9/32

(54) **COMPUTER PROGRAM PRODUCT AND METHOD FOR SECURELY INTEGRATING A NETWORK DEVICE IN A NETWORK, METHOD FOR ESTABLISHING A SECURE COMMUNICATION BETWEEN NETWORK DEVICES**

(71) Applicant: Inalp Solutions AG, 5200 Brugg (CH)
(72) Inventor: Meyer, Thomas, 3027 Bern (CH)
(74) Representative: Hepp Wenger Ryffel AG

(57) **Abstract**

A method for securely integrating a network device (ND) in a network (N) comprising the steps of:
- providing an admin key (AK) in an admin device (AD),
- providing a network device (ND) having
(i) an identity private key (IPRK) and a corresponding identity public key (IPUK), and
(ii) information (I) relating to the identity public key (IPUK) and a unique identifier (UI) being contained in an identifier tag (IT) associated with the network device (ND),

- by means of the admin device (AD), physically reading in close proximity the identifier tag (IT),
- by means of the admin device (AD), encrypting the admin key (AK) using the identity public key (IPUK),
- transmitting the encrypted admin key (AK) to a network controller (NC) together with the unique identifier (UI), for subsequent transmission to the network device (ND).

## Description

The present disclosure relates to a computer program product and a method for securely integrating a network device in a network and a method for establishing a secure communication between network devices according to the headings of the independent claims.

Communication networks ensuring security among closely associated devices are well-documented in various contexts, including commercial and industrial applications. There is a significant demand for secure information exchange among distributed devices within specific closed groups over existing traditional computer networks.

Traditional methods involve establishing Virtual Private Network (VPN) connections between individual devices and a central message router. However, this hub-and-spoke architecture presents challenges, particularly in mission-critical networks like Operations Technology (OT). Hub-and-spoke networks struggle to scale with an increasing number of connected devices and are susceptible to single points of failure, such as the central router. Moreover, current mainstream technologies like IPsec (S. Kent and K. Seo, "IETF RFC 4301 - Security Architecture for the Internet Protocol", IETF, 2005. [Online]. Available: https://data-tracker.ietf.org/doc/html/rfc4301) and OpenVPN ("Business VPN for Secure Networking | OpenVPN", OpenVPN Inc., [Online]. Available: https://openvpn.net.) offer a plethora of cryptographic suites, making it cumbersome for network maintainers to select a secure yet compatible configuration. Furthermore, these conventional cryptographic suites are often resource-intensive, posing constraints in terms of computational requirements and memory consumption, rendering them unsuitable for industrial applications.

To address these limitations, peer-to-peer overlay networks (W. Galuba and S. Girdzijauskas, "Peer to Peer Overlay Networks: Structure, Routing and Maintenance", in Encyclopedia of Database Systems, Boston, MA, Springer, 2009, pp. 2056-2061) have emerged as an alternative. In such networks, each participating device establishes direct links with multiple peers within the closed network. This overlay network can span across multiple physical networks, encompassing various intermediate devices like switches, routers, firewalls, and Network Address Translation (NAT) devices.

An exemplary recent innovation in this domain is WireGuard (J. A. Donenfeld, "Wireguard: Next Generation Kernel Network Tunnel", in NDSS, 2017; J. A. Donenfeld, "WireGuard", [Online]. Available: https://www.wireguard.com), a streamlined VPN solution leveraging cutting-edge cryptography. It aims to outperform traditional protocols like IPsec and OpenVPN by offering simplicity, speed, and efficiency. WireGuard facilitates secure overlay network connections between participating devices in closed-group networks. It simplifies cryptographic choices by adopting a single, robust approach, utilizing elliptic curve cryptography for key management and ChaCha20-Poly1305 (Y. Nir and L. A., "IETF RFC 7539 - ChaCha20 and Poly1305 for IETF Protocols", 2015. [Online]. Available: https://data-tracker.ietf.org/doc/html/rfc7539) for encryption and authentication of messages.

However, a significant challenge persists, particularly regarding key distribution, which becomes even more pronounced in peer-to-peer overlay networks like WireGuard. Each secured network link in such networks relies on a session key derived from a unique private/public key pair on both ends. In a full-mesh topology comprising N devices, this necessitates the distribution of N public keys to each of the other devices. WireGuard explicitly acknowledges this key distribution challenge, indicating that it falls outside its scope, suggesting it as a concern better addressed at other layers.

One approach to key distribution involves utilizing a secure out-of-band channel, such as encrypted e-mails or physically transferring keys between devices. However, while potentially secure, this method is cumbersome and not user-friendly.

A more contemporary and practical approach involves employing a central controller as server to which each device connects via a dedicated management network separate from the overlay network's data connection. This controller acts as an intermediary, receiving public keys from devices and disseminating them to other devices within the same network.

Often, such controllers are designed for multi-tenant operation, managing multiple overlay networks for disparate clients. However, it's crucial to recognize that the security of these controllers is paramount. Without adequate safeguards, malicious actors could compromise the controller, injecting their own public keys into the network. This scenario represents a significant threat to the integrity of the closed-group overlay network, as it compromises data security and identity verification. Thus, the controller emerges as the weakest link in the security chain and requires meticulous attention to ensure robust protection against potential breaches.

It is the task of the invention to overcome the disadvantages of the prior art. In particular, attacks aimed at intercepting or altering cryptographic keys during transmission or storage shall be prevented. Any unauthorized device insertion into a network shall be prevented.

This task is solved by the devices and methods defined in the independent patent claims. Further embodiments result from the dependent patent claims.

The objective of the disclosed invention is to facilitate the distribution of cryptographic keys among devices within a closed-group peer-to-peer overlay network via a central controller. The disclosed distribution system and method aims to prevent an attacker from intercepting and modifying the keys during transmission over the communication network or while stored on the central controller. Consequently, the invention safeguards against unauthorized insertion of devices into the overlay network by an attacker, thereby preventing access to the data transmitted across the overlay network. Importantly, the key distribution mechanism is designed to operate asynchronously, ensuring that devices can receive and process new keys even if they are temporarily offline.

An inventive method for securely integrating a network device in a network comprises the steps of:
- providing an admin key in an admin device,
- providing a network device having
   (i) an identity private key and a corresponding identity public key stored in the network device, and
   (ii) information relating to the identity public key and a unique identifier being contained in an identifier tag associated with the network device,
- by means of the admin device, physically reading in close proximity the identifier tag,
- by means of the admin device, encrypting the admin key using the identity public key of the network device such as to generate an encrypted admin key,
- transmitting the encrypted admin key to a network controller together with the unique identifier, for subsequent transmission of the encrypted admin key to the network device from the network controller.

The expression "in close proximity of" in this context has the meaning, that the admin device physically has to be on site with the network device in order to read the identifier tag. As an example, the distance between admin device and network device is less than 5 m, preferably less than 2 m and more preferably less than 1 m. The communication of the information of the identifier tag to the admin device can be only uni-directional, such as to prevent information from the admin device to be transferred directly to the network device. The transmission might be optically, e.g. by visually scanning the identifier tag. The information migth be presented in the identifier tag in the form of a QR code. However, other forms are conceivable.

By physically reading the identifier tag, a connection can only be made with the network device that is intended to be intergrated into the network.

Having the admin key in the network controller only available in encrypted form any unauthorized use of the admin key is prevented. The admin key can only be decrypted using the identity private key of the corresponding network device.

Transmitting the admin key only encrypted and thus havig it at no time available for direct interception, the insertion of a device not belonging to the network is hindered. Since the admin key is encrypted using the identity public key of the network device, the admin key can only be decrypted by any device being in possession of the corresponding identity private key. However, this corresponding identity private key is only available on the network device to be integrated into the network. Therefore, the distribution of the admin key is only successful to the relevant network device.

Transmission of the encrypted admin key together with the unique identifier to a network controller allows a selective transmission of the encrypted admin key to the network device having the same unique identifier.

A further aspect of the present invention is a method or securely integrating a network device in a network comprising the steps of:
- providing a network device having
   (i) an identity private key and a corresponding identity public key stored in the network device, and
   (ii) information relating to the identity public key and a unique identifier being contained in an identifier tag associated with the network device,
- receiving, from a network controller, an encrypted admin key encrypted with the identity public key together with the unique identifier,
- decrypting the encrypted admin key on the network device using the identity private key,
- encrypting or signing a link public key on the network device by using the admin key,
- transmitting the encrypted or signed link public key to at least another network device or to the network controller for subsequent transmission to at least one other network device.

Receiving the encrypted admin key encrypted with the identity public key of the network device together with the unique identifier of the network device allows an easy verification that correct encrypted admin key is received. The decryption using the network device's identity private key therefore can easily be performed.

After having the admin key available in the network device, the admin key can be used to encrypt or sign the network device's public link key. This in turn makes sure for each of the devices being in the network, that the encrypted or signed public link key of the network device has not been altered during transmission.

A further aspect of the present invention is a method for securely integrating a network device in a network comprising the steps of:
- receiving, from an admin device, an encrypted admin key encrypted with an identity public key of a network device together with a unique identifier of the network device,
- transmitting, to the network device, the encrypted admin key.

By transmitting the admin key only encrypted and thus havig it at no time available for direct interception, the insertion of a device not belonging to the network is hindered. Since the admin key is encrypted using the identity public key of the network device, the admin key can only be decrypted by any device being in possession of the corresponding identity private key. However, this corresponding identity private key is only available on the network device to be integrated into the network. Therefore, the distribution of the admin key is only successful to the relevant network device.

The transmission of the encrypted admin key can be allowed only to a network device having the unique identifier previously received. Since the admin key is encrypted using the identity public key of the network device to be integrated, the admin key can only be decrypted by this specific device being in possession of the corresponding identity private key. Therefore, the distribution of the admin key to an unauthorized device can be prevented.

A link public key from the network device can be transmitted to the network controller for further transmission to a further network device. The network controller therefore serves a distributor of the link public key. No direct connection between the network device and a further network device needs to be established.

The link public key can be encrypted or signed using the admin key for the transmission to the network controller and for the further transmission to the further network device. Encrypting or signing the link public key allows the receiving part to verify that the link public key has not been altered during transmission.

A further aspect of the present invention is a method for establishing a secure communication between network devices in a network comprising the steps of:
- providing a link private key and a corresponding link public key in the network device,
- encrypting or signing the link public key of the network device with an admin key stored in the network device,
- transmitting, preferably via a network controller, the encrypted or signed link public key of the network device to at least one further network device having the admin key stored thereon,
- receiving an encrypted or signed further link public key form the at least one further network device,
- decrypting the encrypted or verifying the signed further link public key using the admin key,
- establishing a secure or encrypted connection with the further network device by using the link private key of the network device and the further link public key of the further network device.

As soon as the network device has stored the admin key, a secure communication with network devices within the network can be established. By transmitting the link private key of the network device signed or encrypted either directly or via the network controller to a further network device, a secure connection between the two devices can be established in a known manner. Using the admin key to either encrypt/decrypt or sign/verify ensures safe communication between the devices.

Further aspects of the present invention are related to computer program products executable on a processor of an admin device, of a network device and of a network controller with all the features and advatages as previously described.

With reference to figures, which are merely examples of embodiments, the disclosed invention is explained in more detail below. They show:
- Figure 1:: a schematical example of the architecture of a typical overlay network as described in the prior art,
- Figure 2:: a schematic example of a communication pathway between two devices as described in the prior art,
- Figure 3:: a schematic example of exchanging public keys in prior art,
- Figure 4:: a schematical drawing of an admin device generating an admin key according to the invention,
- Figure 5:: in a schematical view of a network device to be integrated into a communication network according to the invention,
- Figure 6:: distribution of the admin key to the network device according to the invention,
- Figure 7:: distribution of a link public key of one network device to other network devices according to the invention,
- Figure 8:: in a schematical view an overlay network comprising two network devices according to the invention.

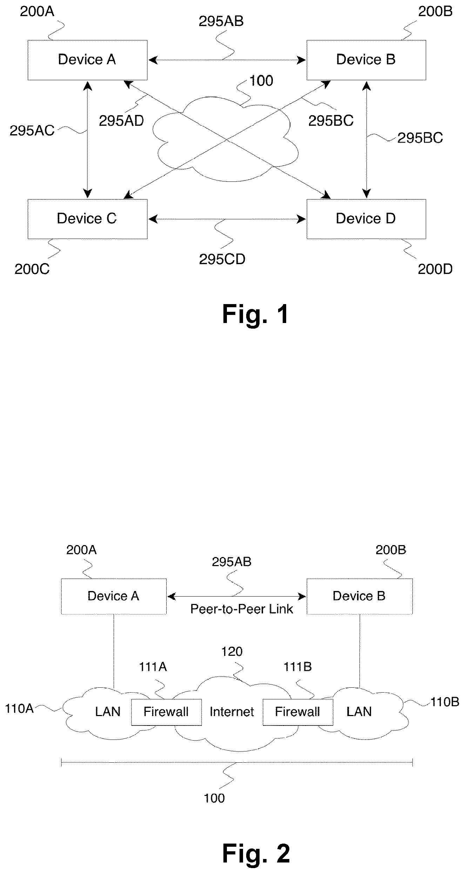

Figures 1 and 2 serve as illustrative examples depicting the architecture of a typical overlay network as described in prior art. In figure 1, four devices denoted as 200A through 200D collaborate to form the overlay network, interconnected by individual peer-to-peer links denoted as 295AB, 295AC, 295AD, and so forth. These links are established across diverse existing computer networks summarized as 100, with further elaboration provided in figure 2.

In figure 2, the communication pathway between device A 100A and device B 100B is shown. This pathway often traverses through a local area network (LAN) adjacent to device A 110A, potentially traverses a firewall 111A, crosses the internet 120, may encounter another firewall 111B, and finally connects to a LAN adjacent to device B 110B. Over this or more complex network topologies, a direct, secured peer-to-peer link denoted as 295AB is established between device A 200A and device B 200B. This link 295AB ensures that data transmitted by device A 200A can only be received by device B 200B, and vice versa, ensuring data integrity and confidentiality within the closed-group overlay network.

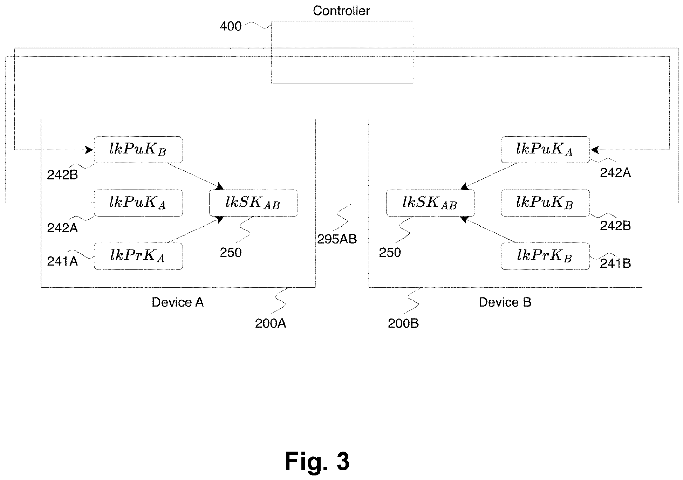

Figure 3 provides additional insight into the process of exchanging public keys in current art. This exchange is a prerequisite for establishing communication over a secured peer-to-peer link. To initiate this process, device A 200A generates an elliptic-curve link private key, denoted as lkPrK_{A} 241A, along with its corresponding public key, lkPuK_{A} 242A. Subsequently, device A 200A must transmit this public key 242B to device B 200B via an unspecified out-of-band channel through a central controller 400. In parallel, device B 200B undertakes a similar procedure, generating its own link private key and public key, denoted as lkPrK_{B} 241A and lkPuK_{B} 242B, respectively, and shares its public key with device A 200A.

Following the exchange of public keys, both device A 200A and device B 200B compute the same session key, lkSK_{AB} 250, utilizing Elliptic Curve Diffie-Hellman (ECDH) (D. R. L. Brown, "Standards for Efficient Cryptography 1: Elliptic Curve Cryptography", Certicom Research, 2009. [Online]. Available: http://www.secg.org/sec1-v2.pdf), exemplified by the X25519 ("X25519", [Online]. Available:
https://archive.ph/20200829210454/https://cryptopp.com/w/index.p hp?title=X25519&oldid=26377) algorithm. Notably, the inherent properties of elliptic curves ensure that both peers arrive at the same session key by combining their respective link private key with the peer's link public key. This cryptographic process guarantees secure communication between the devices 295AB, preserving confidentiality and integrity within the closed-group overlay network.

For the operation of the invention, it is imperative that all network devices ND and the admin device AD initially generate a set of cryptographic keys required for subsequent procedures. The admin device does not need to be a special device, it is also possible to run an admin application AA on a mobilde device such as e.g. on a smart phone. The mobile device then becomes the admin device AD.

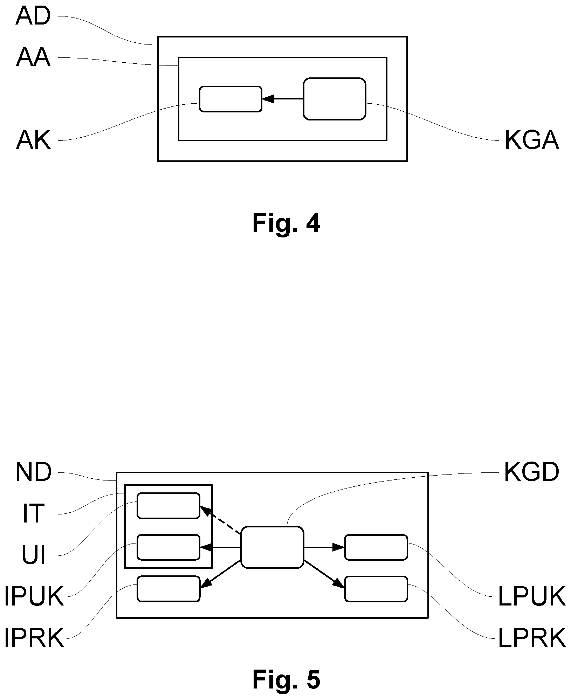

Figures 4 and 5 discloses the process and location of key generation in a admin device AD (see figure 4) or a network device ND (see figure 5).

A key generator module KGD is tasked with generating cryptographic keys for each network device ND. In one embodiment of the invention, particularly for virtual devices operating as virtual machines, the key generator KGD functions as a software module running directly on the network device ND. Alternatively, in scenarios involving physical devices, the key generator KGD may operate on a separate computer in the factory, with the generated keys subsequently transferred to the target network device ND during manufacturing.

For each device ND the key generator KGD is responsible for generating the following data: a unique identifier UI, an identity key pair comprising a private key IPRK and a public key IPUK, and a link key pair comprising a private key LPRK and a public key LPUK.

The unique identifier UI serves the purpose of uniquely identifying a network device ND, ensuring no duplication across devices. In one embodiment, the key generator KGD assigns serial numbers as unique identifier UI to physical network devices ND during the manufacturing process. In contrast, for virtual network devices ND, the key generator KGD executes on the network device ND during its initial boot-up, a random serial number as unique identifier UI. One method to create a unique identity involves, but is not limited to, combining a timestamp with a sufficiently random number to prevent collisions. This unique idnetifier UI remains constant throughout the network device's lifecycle.

Additionally, the key generator KGD produces an identity private key IPRK and its corresponding identity public key IPUK. While one implementation utilizes established elliptic-curve cryptography such as Curve25519 (D. J. Bernstein, "Curve25519: New Diffie-Hellman Speed Records", Public Key Cryptography. Lecture Notes in Computer Science, vol. 3958, pp. 207-228, 2006), other existing or novel private/public key algorithms like RSA (R. Rivest, A. Shamir and L. Adleman, "A Method for Obtaining Digital Signatures and Public-Key Cryptosystems", Communications of the ACM, vol. 21, pp. 120-126, 1978.) could also be employed. A reference implementation of Curve25519 is in public domain (D. J. Bernstein, "A State-of-the-Art Diffie-Hellman Function", [Online]. Available: https://cr.yp.to/ecdh.html; "X25519", [Online]. Available: https://archive.ph/20200829210454/https://cryptopp.com/w/index.p hp?title=X25519&oldid=26377). The identity key pair IPRK and IPUK remains static throughout the network device's lifespan, playing a pivotal role in defining its identity.

Moreover, the key generator KGD generates a link private key LPRK along with its corresponding link public key LPUK. The same considerations regarding cryptographic algorithms apply as discussed for the identity key pair. This key pair is consistently generated during the network device's initial boot-up, although a network device ND retains the ability to regenerate its link key pair at any time.

Another key generator KGA within the admin app AA operating on the admin device AD generates a random admin key AK to be employed for symmetric encryption purposes. In one implementation, a 256-bit random number serves as the basis for generating this admin key AK, although alternative methods for random key generation are also feasible.

An administrator A has the capability to share the admin key AK with colleagues. In one embodiment of the system, the admin key AK can be displayed as a QR code within the admin app AA. This QR code enables it to be scanned by the admin app AA installed on another admin device AD belonging to a different administrator A. However different methods for sharing the admin key AK are feasible.

After generating all permanent keys in the previous phase, this second phase lets the admin app AA disseminate the admin key AK. This occurs during the onboarding process of a new network device ND, where the network device ND is to be added to an existing overlay network. The admin key AK becomes critical in the subsequent phase, as all network devices NDa, NDb, NDc, ... NDx, require it for signing their link public keys LPUK.

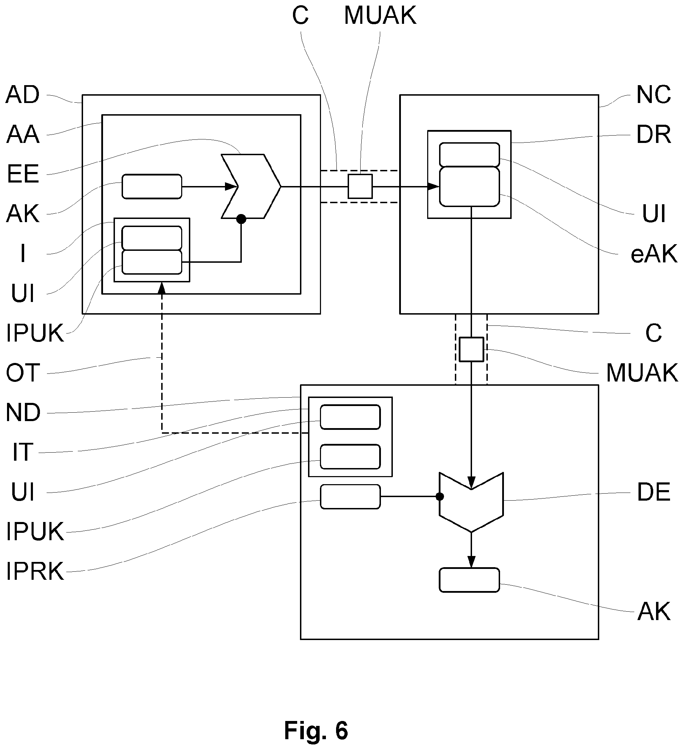

Figure 6 outlines the method for distributing the admin key AK. Initially, the admin app AA running on the admin device AD optically scans OT an identifier tag IT pertaining to the network device ND to be onboarded. In one embodiment of the system, this identifier tag IT is presented as a QR code located on the physical network device label, although alternative methods of information presentation are feasible. Instead of an optical scanning of the identifier tag IT any other one directional transmission of the information is feasible. The identifier tag IT comprises the network device's unique identifier UI and its identity public key IPUK, with optional non-critical information also potentially exposed in a similar manner.

Upon scanning and transmitting OT the information of the identifier tag IT, the unique identifier UI and the identity public key IPUK of the network device ND are temporarily stored in a volatile memory of the admin app AA. Subsequently, the admin app AA encrypts with a encryption enging EE the identity public key IPUK of the network device ND using the admin key AK, resulting in a message MUAK containing the network device's unique identifier UI and the encrypted admin key eAK. The encryption process is elaborated upon in subsequent sections.

Following encryption the admin app AA transmits the generated message MUAK over its permanent network connection C to a network controller NC. The network controller NC records the message MUAK as a database record DR in persistent memory, indexed by the device's unique identifier UI.

Subsequently, when the same network device ND connects to the network controller NC, the network controller NC retrieves the message MUAK from its database using the network device's unique identifier UI as the index. Upon retrieval, the network controller NC forwards the message MUAK to the same network device ND that was onboarded. Therefore, the network controller NC acts as a store-and-forward mechanism, facilitating an asynchronous nature in the key distribution method.

On the network device ND, a decryption engine DE decrypts the message MUAK using the network device's identity private key IPRK, thereby obtaining the admin key AK, which was the goal of this phase of the method.

To encrypt the admin key AK within the admin app AA, various private/public key encryption methods may be employed. One embodiment of this method involves utilizing the elliptic curve identity public key IPUK associated with the network device ND, such as Curve25519 (D. J. Bernstein, "Curve25519: New Diffie-Hellman Speed Records", Public Key Cryptography. Lecture Notes in Computer Science, vol. 3958, pp. 207-228, 2006). It is noted that encrypting a message with an elliptic curve public key is well-established in the field, and experts will be familiar with the process.

Decrypting the message MUAK on the network device ND using a decryption engine DE involves the reverse process of encryption, which is not depicted here for brevity. Implementing the corresponding program should pose no difficulty for experts in the field.

In the preceding phase, the dissemination of the admin key AK from the admin app AA to all network devices occurs during the onboarding of a network device. This results in all onboarded network devices ND possessing the same admin key AK, while foreign devices or malicious observers of the communication C or the persistent database record DR within the network controller NC are unable to access the admin key AK.

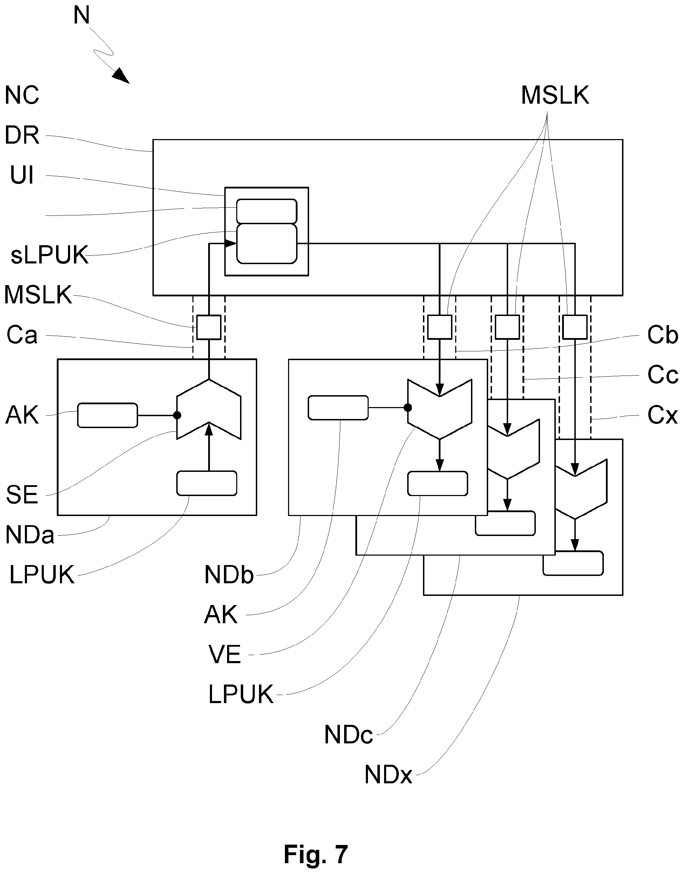

Figure 7 illustrates the method of distributing the link public keys among network devices by signing it. An alternative implementation of the system might encrypt the public key using a method akin to the one depicted in the preceding second phase.

In this concluding phase, a network device NDa securely distributes its link public key LPUK to all other devices NDb, NDc, ... NDx of the same overlay network N via the network controller NC. To safeguard the key against modification and malicious insertion of unauthorized keys, the network device NDa either signs or encrypts the link public key LPUK with the admin key AK received in the previous phase.

Whenever a network device NDa receives the admin key AK from the network controller NC or generates a new link private/public key pair LPRK, LPUK, resp., the device NDa signs with its signing engine SE the link public key LPUK with the received admin key AK. This signature serves as proof that the device NDa possesses the admin key AK and is therefore authorized to join the overlay network N. Further details on the signing process will be provided later.

Following signing, the device NDa transmits a message containing the signed link public key MSLK over its permanent network connection Ca to the network controller NC. The network controller NC records the message MSLK as a database record DR in a persistent memory, indexed by the device's unique identifier UI.

When other devices NDb, NDc, ... NDx within the same overlay network are already connected throug connetion Cb, Cc, ... Cx to the network controller NC at that time, the network controller NC retrieves the message with the signed link public key MSLK of network device NDa from the database DR. Upon retrieval, the network controller NC forwards the message MSLK to the connected network devices NDb, NDc, ... NDx.

If another device NDb is not connected to the network controller NC when network device NDa sends its signed link public key MSLK to the network controller NC, the network controller NC sends the connecting network device NDb the messages containg the signed public link keys MSLK of all other devices NDa, NDc, ... NDx at a later time. Thus, the network controller NC acts as a store-and-forward mechanism, facilitating an asynchronous nature in the key distribution method.

Upon receiving the message with the signed link public key MSLK of another network device (e.g. NDa), network device NDb verifies with its verifying engine VE the signature with the admin key AK received during onboarding by the same admin device AD as network device NDa. This verification process ensures that the received link public key LPUK has been authorized by the administrator and has not been tampered with by an attacker, thus preventing unauthorized device injection.

To sign the link public key LPUK within the network device NDa, a signing enging SE using a variety of signature methods may be utilized. It's important to note that signing a message is a well-established practice within the field, and experts will be familiar with the process.

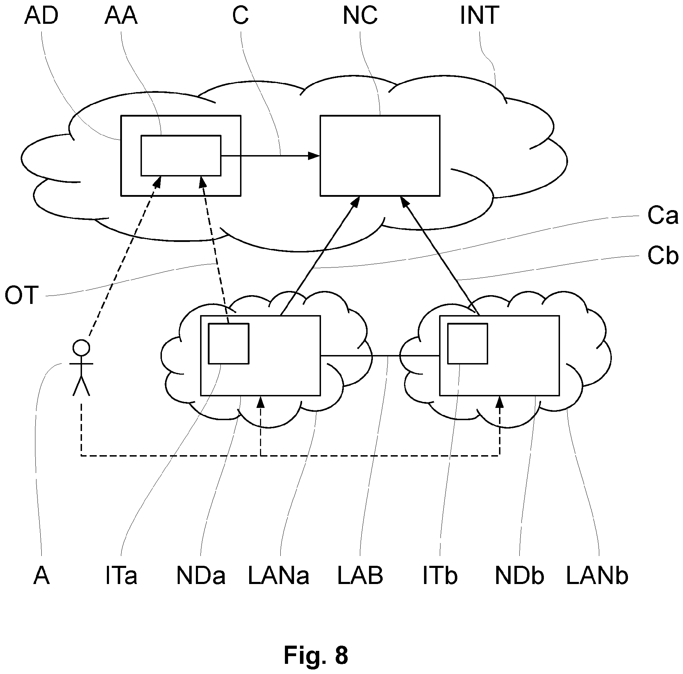

Figure 8 depicts a sample system arrangement featuring two network devices NDa, NDb, between which an overlay network, here represented by a single link LAB, is to be established. While the system may encompass more than two network devices NDa, NDb, the described system and key distribution method remain consistent. Each network device NDa, NDb presents identity information visually by a idnetifier tag ITa, ITb, exemplified by a QR code, although not limited to this mode.

The system includes the administrator A who is in possession of an admin device AD executing an admin app AA, which optically scans OT the presented idnetifier tag ITa of the network device NDa for further processing. Additionally, a central network controller NC is incorporated into the system.

The network devices NDa, NDb, etc., are typically physically connected to a distinct local area networks LANa, LANb situated at remote locations. The network controller NC is typically linked to the public internet INT. The admin device AD may be physically connected to either a local area network or the internet INT. It should be noted that the network topology is not confined to the configuration depicted in figure 8.

The network devices NDa, NDb establish a permanent connection Ca, Cb to the network controller NC. The admin app AA also establishes a permanent connection C to the network controller NC. Here, "permanent connection" refers to the establishment of a computer network connection from the client side (admin app or network device) to the server (network controller), with automatic reconnection in case of disconnection. One possible embodiment of the system might utilize a WebSocket (I. Fette and A. Melnikov, "IETF RFC 6455 - The WebSocket Protocol", IETF, 2011. [Online]. Available: https://datatracker.ietf.org/doc/html/rfc6455) connection, while others may employ methods such as HTTPS long-polls (I. Paterson, D. Smith, S.-A. P., J. Moffitt, L. Stout and T. W., "XEP-0124: Bidirectional-streams Over Synchronous HTTP (BOSH)", XMPP Standards Foundation, 22 May 2021. [Online]. Available: https://xmpp.org/extensions/xep-0124.html).

The key-exchange system and method outlined in this invention function seamlessly under specific network communication constraints, while also remaining applicable when these constraints are relaxed:
1. For the key exchange, network devices, e.g. NDa, are not required to communicate directly with each other over a computer network, relying solely on communication through the network controller NC.
2. Communication between network devices, e.g. NDa, and the admin device AD, or vice versa, need not occur directly over a computer network, but rather through the network controller NC.
3. Network devices, e.g. NDa, must be capable of optically transmitting OT a short static message to the admin device AD. In one embodiment, this static message is embedded in a identifier tag IT, e.g. as a QR code, created during the manufacturing process and affixed to the device as a label. To this end, the administrator A must be in physical proximity of the network device, e.g. NDa, while reading the identifier tag IT, e.g. scanning the QR code.
4. Network devices, e.g. NDa, need to establish a connection Ca over a communication network to the network controller NC.
5. The admin device AD must establish a connection C over a communication network to the network controller NC.

## Claims

1. A method for securely integrating a network device (ND) in a network (N) comprising the steps of:
- providing an admin key (AK) in an admin device (AD),
- providing a network device (ND) having
(i) an identity private key (IPRK) and a corresponding identity public key (IPUK) stored in the network device (ND), and
(ii) information (I) relating to the identity public key (IPUK) and a unique identifier (UI) being contained in an identifier tag (IT) associated with the network device (ND),
- by means of the admin device (AD), physically reading in close proximity the identifier tag (IT),
- by means of the admin device (AD), encrypting the admin key (AK) using the identity public key (IPUK) of the network device (ND) such as to generate an encrypted admin key (AK),
- transmitting the encrypted admin key (AK) to a network controller (NC) together with the unique identifier (UI), for subsequent transmission of the encrypted admin key (AK) to the network device (ND) from the network controller (NC).

2. A method for securely integrating a network device (ND) in a network (N) comprising the steps of:
- providing a network device (ND) having
(i) an identity private key (IPRK) and a corresponding identity public key (IPUK) stored in the network device (ND), and
(ii) information (I) relating to the identity public key (IPUK) and a unique identifier (UI) being contained in an identifier tag (IT) associated with the network device (ND),
- receiving, from a network controller (NC), an encrypted admin key (AK) encrypted with the identity public key (IPUK) together with the unique identifier (UI),
- decrypting the encrypted admin key (AK) on the network device (ND) using the identity private key (IPRK),
- encrypting or signing a link public key (LPUK) on the network device (ND) by using the admin key (AK),
- transmitting the encrypted or signed link public key (LPUK) to at least another network device (ND) or to the network controller (NC) for subsequent transmission to at least one other network device (ND).

3. A method for securely integrating a network device (ND) in a network (N) comprising the steps of:
- receiving, from an admin device (AD), an encrypted admin key (AK) encrypted with an identity public key (IPUK) of a network device (ND) together with a unique identifier (UI) of the network device (ND),
- transmitting, to the network device (ND), the encrypted admin key (AK).

4. The method according to claim 3, wherein the transmission of the encrypted admin key (AK) is only allowed to a network device (ND) having the unique identifier (UI) previously received.

5. The method according to claim 3 or 4, wherein a link public key (LPUK) from the network device (ND) is transmitted to the network controller (NC) for further transmission to a further network device (NDa, NDb, DNc, NDx).

6. The method according to claim 5, wherein the link public key (LPUK) is encrypted or signed using the admin key (AK).

7. A method for establishing a secure communication between network devices (ND) in a network (N) comprising the steps of:
- providing a link private key (LPRK) and a corresponding link public key (LPUK) in the network device (ND),
- encrypting or signing the link public key (LPUK) of the network device (ND) with an admin key (AK) stored in the network device (ND),
- transmitting, preferably via a network controller (NC), the encrypted or signed link public key (LPUK) of the network device (ND) to at least one further network device (NDa, NDb, NDc, NDx) having the admin key (AK) stored thereon,
- receiving an encrypted or signed further link public key (LPUK) form the at least one further network device (NDa, NDb, NDc, NDx),
- decrypting the encrypted or verifying the signed further link public key (LPUK) using the admin key (AK),
- establishing a secure or encrypted connection (C) with the further network device (NDa, NDb, NDc, NDx) by using the link private key (LPRK) of the network device (ND) and the further link public key (LPUK) of the further network device (NDa, NDb, NDc, NDx).

8. A computer program product for securely integrating a network device (ND) in a network (N) comprising instructions which, when the program is executed by a processor of an admin device (AD), cause the admin device (AD) to:
- provide an admin key (AK) in the admin device (AD),
- induce the admin device (AD) to physically read in close proximity an identifier tag (IT) of a network device (ND), wherein the identifier tag (IT) contains information (I) relating to an identity public key (IPUK) and a unique identifier (UI) being stored in the network device (ND),
- encrypt the admin key (AK) using the identity public key (IPUK) of the network device (ND) such as to generate an encrypted admin key (AK),
- transmit the encrypted admin key (AK) to a network controller (NC) together with the unique identifier (UI), for subsequent transmission of the encrypted admin key (AK) to the network device (ND) from the network controller (NC).

9. A computer program product for securely integrating a network device (ND) in a network (N) comprising instructions which, when the program is executed by a processor of the network device (ND), cause the network device (ND) to:
- store an identity private key (IPRK) and a corresponding identity public key (IPUK) in the network device (ND),
- receive, from a network controller (NC), an encrypted admin key (AK) encrypted with the identity public key (IPUK) together with the unique identifier (UI),
- decrypt the encrypted admin key (AK) using the identity private key (IPRK),
- encrypt or sign a link public key (LPUK) on the network device (ND) by using the admin key (AK),
- transmit the encrypted or signed link public key (LPUK) to at least another network device (ND) or to the network controller (NC) for subsequent transmission to at least one other network device (ND).

10. A computer program product for securely integrating a network device (ND) in a network (N) comprising instructions which, when the program is executed by a processor of a network controller (NC), cause the network controller (NC) to:
- receive, from an admin device (AD), an encrypted admin key (AK) encrypted with an identity public key (IPUK) of a network device (ND) together with a unique identifier (UI) of the network device (ND),
- transmit, to the network device (ND), the encrypted admin key (AK).

11. The computer program product of claim 10, wherein the transmission of the encrypted admin key (AK) is only allowed to a network device (ND) having the unique identifier (UI) previously received.

12. The computer program product according to claim 10 or 11, causing the network controller (NC) to receive a link public key (LPUK) from the network device (ND) and subsequently transmit the link public key (LPUK) to a further network device (NDa, NDb, NDc, NDx).

13. The computer program product according to claim 12, wherein the link public key (LPUK) is encrypted or signed using the admin key (AK).
